# EUROPEAN PATENT APPLICATION

(11) **EP 4 610 044 A1**
(43) Date of publication of application: **03.09.2025**
(21) Application number: 23882717.4
(22) Date of filing: 26.10.2023
(51) Int. Cl.: B32B 5/24, B32B 5/30, B32B 9/00, D06M 11/79, D06M 23/08

(54) **PARTICLE-INCLUDING BASE MATERIAL, AND PRODUCTION METHOD FOR PARTICLE-INCLUDING BASE MATERIAL**

(30) Priority: 26.10.2022 JP 2022171712
(71) Applicant: Dai Nippon Printing Co., Ltd., Tokyo 162-8001 (JP)
(72) Inventor: OKOCHI, Norihiko, Tokyo 162-8001 (JP)
(74) Representative: Müller-Boré & Partner Patentanwälte PartG mbB
(86) International application number: PCT/JP2023/038670
(87) International publication number: WO 2024/090513

(57) **Abstract**

The present disclosure provides a substrate provided with particles comprising: a fiber substrate including an inorganic fiber; an inorganic film disposed on a surface of the fiber substrate and includes an inorganic compound; and functional particles fixed, by the inorganic film, on the surface of the fiber substrate.

## Description

### Technical Field

The present disclosure relates to a substrate provided with particles, and a method for producing a substrate provided with particles.

### Background Art

Conventionally, technology to fix functional particles on the surface of a substrate, to impart functions such as environmental purification, antimicrobial, antiviral, anti-mold, and self-cleaning, is known.

Examples of the technology to fix functional particles on the surface of a substrate may include a method wherein binders are used. For example, Patent Document 1 and Patent Document 2 disclose a photocatalytic member including a layer including photocatalytic particles and inorganic binders.

Also, as the technology to fix functional particles on the surface of a substrate, for example, methods wherein functional particles are adsorbed on the surface of a substrate, are proposed. For example, Patent Document 3 discloses a method for electrostatic adsorption of photocatalytic particles onto the surface of polyester fibers.

### Citation List

### Patent Documents

Patent Document 1: Japanese Patent Application Laid-Open (JP-A) No. 2008-272651
Patent Document 2: JP-A No. 2018-528072
Patent Document 3: JP-A No. 2007-229667

### Summary of Disclosure

### Technical Problem

By the methods using binders, as disclosed in Patent Document 1 or Patent Document 2, the functional particles can be stably fixed to the surface of a substrate. However, there is a problem that at least a part of the functional particles is buried in the binder, so that their functions are reduced. In particular, when the layer including the functional particles and binder is a dense film, and there are almost no fine pores, the functional particles cannot come into contact with the materials in the external environment so that the functions are drastically reduced.

Also, since the binders are not used in the method utilizing electrostatic adsorption as described in Patent Document 3, the functions of the functional particles can be fully exhibited. Further, the functional particles can be adsorbed at high densities. However, there is a problem that the close adhesiveness of functional particles to the substrate is not sufficient, and the functional particles tend to fall off.

The present disclosure has been made in view of the above circumstances, and a main object of the present disclosure is to provide a substrate provided with particles and a method for producing a substrate provided with particles that is able to fix the particles on the substrate surface stably and at high densities, while maintaining the functions of the particles.

### Solution to Problem

One embodiment of the present disclosure provides a substrate provided with particles comprising: a fiber substrate including an inorganic fiber; an inorganic film disposed on a surface of the fiber substrate and includes an inorganic compound; and functional particles fixed, by the inorganic film, on the surface of the fiber substrate.

Another embodiment of the present disclosure provides a method for producing a substrate provided with particles, the method comprising: a functional group introduction step of introducing a functional group, that is positively or negatively charged in water, to a surface of a substrate; a particle electrostatic adsorption step of electrostatically adsorb functional particles onto the surface of the substrate to which the functional group is introduced; and after the particle electrostatic adsorption step, an inorganic film forming step of forming an inorganic film including an inorganic compound so as to cover the surface of the substrate.

### Advantageous Effects of Disclosure

The present disclosure exhibits effects that the particles can be fixed on the substrate surface stably and at high densities, while maintaining the functions of the particles.

### Brief Description of Drawings

[FIG. 1] is a schematic cross-sectional view exemplifying a substrate provided with particles in the present disclosure.
[FIGS. 2] are process drawings exemplifying a method for producing a substrate provided with particles in the present disclosure.
[FIG. 3] is a schematic cross-sectional view exemplifying a substrate provided with particles in the present disclosure.
[FIG. 4] is a schematic cross-sectional view exemplifying a substrate provided with particles in the present disclosure.
[FIG. 5] is a schematic cross-sectional view exemplifying a substrate provided with particles in the present disclosure.
[FIGS. 6] are process drawings exemplifying a method for producing a substrate provided with particles in the present disclosure.
[FIG. 7] is a SEM image of the polymethylsilsesquioxane (PMSQ) particles in Example 1.
[FIGS. 8] are SEM images of the substrate provided with particles in Example 1.
[FIG. 9] is a SEM image of the substrate provided with particles in Example 2.

### Description of Embodiments

Embodiments in the present disclosure are hereinafter explained with reference to, for example, drawings. However, the present disclosure is implemented in a variety of different forms, and thus should not be taken as is limited to the contents described in the embodiments exemplified as below. Also, the drawings may show the features of the present disclosure such as width, thickness, and shape of each part schematically comparing to the actual form in order to explain the present disclosure more clearly in some cases; however, it is merely an example, and thus does not limit the interpretation of the present disclosure. Also, in the present descriptions and each drawing, for the factor same as that described in the figure already explained, the same reference sign is indicated and the detailed explanation thereof may be omitted.

The substrate provided with particles and the method for producing a substrate provided with particles in the present disclosure are hereinafter explained in detail.

### A. Substrate provided with particles

The substrate provided with particles in the present disclosure comprises: a fiber substrate including an inorganic fiber; an inorganic film disposed on a surface of the fiber substrate and includes an inorganic compound; and particles fixed, by the inorganic film, on the surface of the fiber substrate.

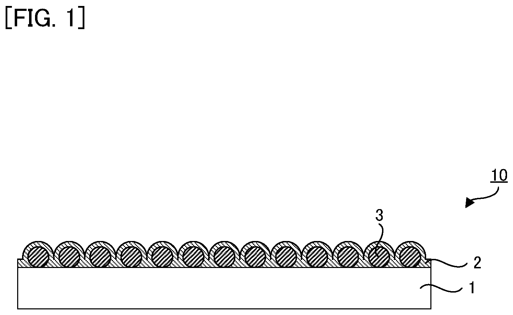

FIG. 1 is a schematic cross-sectional view exemplifying the substrate provided with particles in the present disclosure. As shown in FIG. 1, the substrate provided with particles 10 comprises: a fiber substrate 1 including an inorganic fiber; an inorganic film 2 disposed on a surface of the fiber substrate 1 and includes an inorganic compound; and particles 3 fixed, by the inorganic film 2, on the surface of the fiber substrate 1.

In the substrate provided with particles in the present disclosure, the particles are fixed, by the inorganic film, on the surface of the fiber substrate. The inorganic film is a layer configured to fix the particles, and although it includes the inorganic compound, it does not include the particles. Therefore, unlike the conventional case where a layer is formed using a composition including particles and a binder, the particles can be suppressed from being buried in the binder. Also, since the particles are fixed by the inorganic film and are not buried in the binder, the particles can be in contact with materials in the external environment that gradually diffuse and pass through inside the inorganic film. Therefore, the functions of the particles can be exhibited to a certain extent. At this time, as described later, when the inorganic film includes a large number of fine pores of the size in which the materials in the external environment can pass through, the utmost function of the particles can be exhibited. Further, since the particles are fixed by the inorganic film, the fall of the particles can be suppressed. Therefore, the particles can be fixed stably on the surface of the fiber substrate while maintaining the functions of the particles.

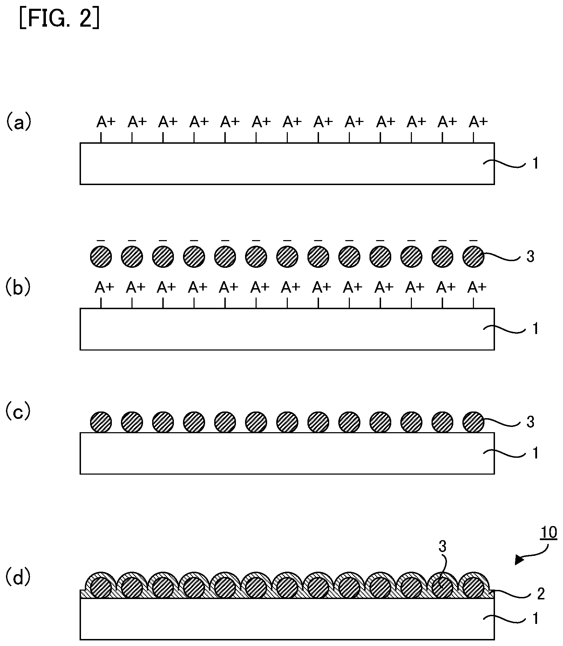

FIGS. 2(a) to (d) are process drawings exemplifying a method for producing a substrate provided with particles in the present disclosure. Firstly, as shown in FIG. 2(a), a functional group A, that is positively charged in water, is introduce to the surface of the fiber substrate 1. Then, as shown in FIG. 2(b) and FIG. 2(c), particles 3, that are negatively charged in water, are electrostatically adsorbed to the surface of the fiber substrate 1 to which the functional group A is introduced. Then, as shown in FIG. 2(d), an inorganic film 2 including an inorganic compound is formed so as to cover the surface of the fiber substrate 1. Thereby, a substrate provided with particles 10 is obtained.

As described above, the substrate provided with particles in the present disclosure can be produced by electrostatic adsorption of the particles onto the surface of the fiber substrate, and then, forming an inorganic film to cover the surface of the fiber substrate. By using the electrostatic adsorption, the particles can be adsorbed on the surface of the fiber substrate at high densities.
Also, as described later, the thickness of the inorganic film is preferably thin to the extent that the materials in the external environment can gradually pass through by diffusion. Therefore, the particles can be fixed stably and at high densities on the surface of the fiber substrate while maintaining the functions of the particles.

Also, in the present disclosure, the fiber substrate includes inorganic fiber. Also, the layer configured to fix the particles is an inorganic film including an inorganic compound. Therefore, for example, when the particles are photocatalytic particles, the fiber substrate and inorganic film are stable with respect to the radicals produced in the photocatalytic reaction. Thus, the durability of the substrate provided with particles can be improved.

Also, in the present disclosure, by using the fiber substrate, the substrate provided with particles can be produced by a roll-to-roll method. As a result, production efficiency can be improved and production costs can be reduced.

Each constitution of the substrate provided with particles in the present disclosure is hereinafter described.

### 1. Particles

The particles in the present disclosure are fixed, by the inorganic film, on the surface of the fiber substrate.

The particles are preferably functional particles. The functional particles are particles that can affect materials by being in contact with the materials. Examples of the functions of the functional particles may include photocatalyst function, antibacterial function, antiviral function, mold-prevention function, ion adsorption function, ion release function, gas adsorption function, gas release function, chemical material sustained-release function, moisture control function, catalyst function, adhesion function, water repellent function, rust prevention function, heat transfer function, heat insulation function, electricity conductive function, and electrical insulation function.

Among the above, the photocatalytic particles are preferable. The photocatalytic particles can be applied in a wide range of environmental fields such as environmental purification, antibacterial, antiviral, anti-mold, deodorization, anti-fouling, anti-fog, and self-cleaning.

Examples of the photocatalytic particles may include titanium oxide (TiO₂), zinc oxide (ZnO), cadmium sulfide (CdS), niobium oxide (Nb₂O₅), tantalum oxide (Ta₂O₅), tungsten oxide (WO₃), molybdenum oxide (MoO₃), and vanadium oxide (V₂O₅).

Also, the photocatalytic particles may also carry materials that improve the activity of the photocatalytic particles. The materials are not particularly limited as long as the material can improve the activity of the photocatalytic particles.

Also, examples of the functional particles may include metal particles, metal oxide particles, metal carbide particles, and metal nitride particles. The metal particles may be constituted from metal simple substance, and may be constituted from metal alloy. Examples of the metal particles may include silver particles, zinc particles, and copper particles.

The average particle size of the particles is not particularly limited, and is preferably, for example, 0.1 µm or more and 10 µm or less, more preferably 0.2 µm or more and 5 µm or less, and further preferably 0.5 µm or more and 2.5 µm or less. When the average particle size of the particles is relatively large as the above range, the particles can be fixed on the surface of the fiber substrate by the inorganic film while suppressing the particles being buried in the inorganic film. Meanwhile, when the average particle size of the particles is too large, the particles may easily fall.

Here, the particle size of the particle can be measured by scanning electron microscopy (SEM) observation of the cross section of the substrate provided with particles. The average particle size of the particles refers to the arithmetic average value of the particle sizes of 20 particles measured by SEM observation. Incidentally, when the shape of the particle is not spherical, the long diameter is regarded as the particle size.

The shape of the particle is not particularly limited, and examples may include spherical-shape, cubic-shape, flat-shape, disk-shape, bar-shape, and needle-shape.

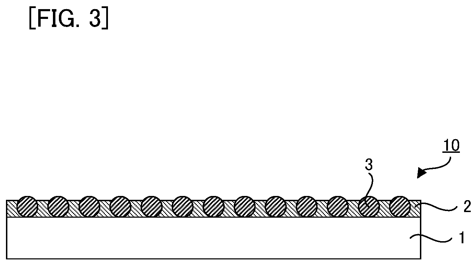

Examples of the embodiment wherein the particles are fixed, by the inorganic film, on the surface of the fiber substrate may include, as shown in FIG. 1 for example, an embodiment wherein the inorganic film 2 is disposed on the surface of the fiber substrate 1 so that the entire particles 3 are covered by the inorganic film 2; and as shown in FIG. 3 for example, an embodiment wherein the inorganic film 2 is disposed on the surface of the fiber substrate 1 so that a part of the particle 3 is exposed. Also, these embodiments may be mixed.

When a part of the particle is exposed, the degree of exposure of the particle, that is, the degree of coverage of the inorganic film on the particle, is not particularly limited.

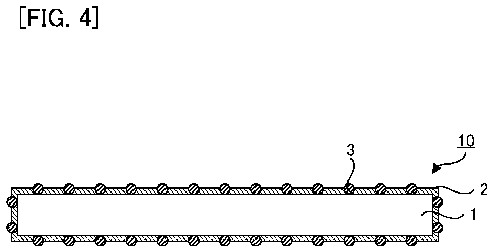

Also, as shown in FIG. 4 for example, the particles 3 may be fixed over the entire surface of the fiber substrate 1, and as shown in FIG. 1 and FIG. 3 for example, the particles 3 may be fixed on a part of the surface of the fiber substrate 1. For example, the particles may be fixed on only one surface out of the two main surfaces of the fiber substrate. Among them, the particles are preferably fixed over the entire surface of the fiber substrate. The function of the particles can be exhibited on the entire surface of the substrate provided with particles.

The amount of the particles in the substrate provided with particles is not particularly limited as long as it is an amount wherein the function of the particles can be exhibited, and it is set appropriately according to the thickness or surface area of the fiber substrate, the type of the particle, and the use application of the substrate provided with particles. The amount of the particles in the substrate provided with particles is preferably, for example, 0.1 mg/cm² or more and 10 mg/cm² or less, more preferably 0.5 mg/cm² or more and 5 mg/cm² or less, and further preferably 1 mg/cm² or more and 3 mg/cm² or less.

Here, the amount of the particles in the substrate provided with particles can be measured by recovering the particles from the substrate provided with particles. For example, when the inorganic film configured to fix the particles is a silica film, the particles can be recovered by dissolving the silica film with a strong alkaline aqueous solution.

### 2. Inorganic film

The inorganic film in the present disclosure is disposed on a surface of the fiber substrate and includes an inorganic compound.

Examples of the inorganic compound may include inorganic compounds that can form an inorganic film by sol-gel method or vapor deposition method. Examples thereof may include inorganic oxides, inorganic fluorides, inorganic sulfides, and inorganic nitrides. Examples of the inorganic oxides may include silica, titania, alumina, zirconia, zinc oxide (ZnO), indium oxide (In₂O₃), tin oxide (SnO₂), indium tin oxide (ITO), and tantalum oxide (Ta₂O₅). Examples of the inorganic fluoride may include magnesium fluoride (MgF₂), aluminum fluoride (AlF₃), barium fluoride (BaF₂), calcium fluoride (CaF₂), cerium fluoride (CeF₃), and yttrium fluoride (YF₃). Examples of the inorganic nitride may include aluminum nitride (AlN), silicon nitride (Si₃N₄), and titanium nitride (TiN).

Among the above, silica is preferable. Silica has excellent weather resistance and durability.

The thickness of the inorganic film is not particularly limited as long as it is the thickness capable of fixing the particles, by the inorganic film, on the surface of the fiber substrate so that the particles can exhibit their functions, and it is appropriately set according to the particle size and shape of the particles. For example, when the particles are covered with the inorganic film, then the thickness of the inorganic film is preferably the thickness of which the material is permeable or penetratable so that the particles can be in contact with the material. Specifically, the thickness of the inorganic film is preferably 2 nm or more and 100 nm or less, more preferably 5 nm or more and 50 nm or less, and further preferably 10 nm or more and 30 nm or less. When the thickness of the inorganic film is relatively thin as in the above range, the particles can exhibit the functions even when the particles are covered by the inorganic film, since the material is permeable or penetratable into the inorganic film so that the particles can be in contact with the material. Meanwhile, when the thickness of the inorganic film is too thin, the particles may easily fall.

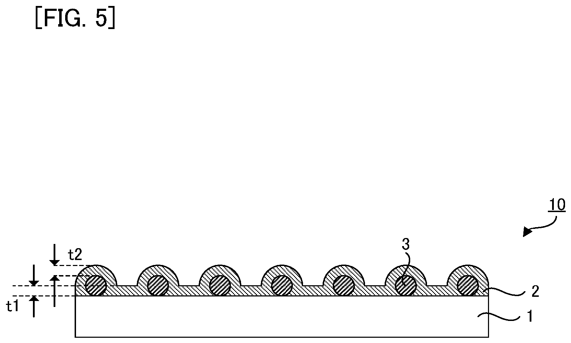

Here, the thickness of the inorganic film refers to the thickness t1 of the inorganic film 2 in the region where there is no particle 3 as shown in FIG. 5 for example, and when the entire particle 3 is covered by the inorganic film 2, it also refers to the thickness t2 of the inorganic film 2 located on the surface of the particle 3. The thickness of the inorganic film can be measured by scanning electron microscopy (SEM) observation or transmission electron microscopy (TEM) observation of the cross-section of the substrate provided with particles.

The inorganic film is preferably a porous film. When the inorganic film is a porous film, the materials in the external environment pass through the inorganic film and come into contact with the particles, so that the utmost function of the particles can be exhibited.

The porous film is a film including a large number of fine pores. The inorganic film preferably includes fine pores of the size in which the materials in the external environment can pass through. Specifically, the inorganic film preferably includes fine pores whose fine pore size is on the order of nanometers. Also, the inorganic film may include any one of micropores with fine pore size of 2 nm or less, mesopores with fine pore size of 2 nm or more and 50 nm or less, and macropores with fine pore size of 50 nm or more. Among them, in view of the fixing strength of the particles, that is, the strength of the inorganic film, the inorganic film preferably includes micropores. In other words, the inorganic film preferably includes fine pores with the fine pore size of 0.3 nm or more and 3 nm or less, more preferably includes fine pores with the fine pore size of 0.4 nm or more and 2 nm or less, and further preferably includes fine pores with the fine pore size of 0.5 nm or more and 1 nm or less.

The phrase "inorganic film includes fine pores with the fine pore size in a predetermined range" means that the inorganic film includes fine pores, and among the fine pores, there are a plurality of fine pores with the fine pore size in the predetermined range.

The fine pore size of the inorganic film is a value determined by observing the surface of the inorganic film with a scanning electron microscopy (SEM) or a transmission electron microscopy (TEM). When the fine pores are mesopores or macropores, SEM is used. Meanwhile, when the fine pores are micropores, TEM is used. As described above, among the fine pores of the inorganic film, more than one fine pores with the fine pore size in the predetermined range have only to exist. among them, it is preferable that there are 100 or more, and further, 1000 or more fine pores with the fine pore size in the predetermined range exist, in 1 µm square of the surface of the inorganic film.

Also, the inorganic film may be either an amorphous film or a crystalline film, and it is preferably an amorphous film. The amorphous films tend to include micropores. Therefore, when the inorganic film is an amorphous film, the materials in the external environment pass through the inorganic film and come into contact with the particles, so that the utmost function of the particles can be exhibited. It can also increase the particle fixing strength.

Whether the inorganic film is an amorphous film or not can be confirmed by an X-ray diffraction method (XRD). When a distinct peak is not observed in the X-ray diffraction pattern, it may be regarded as an amorphous film. However, when an XRD measurement is difficult, whether the inorganic film is an amorphous film or not is confirmed by a transmission electron microscopy (TEM) observation. In the TEM observation, when an image including black spots or white spots (that is, portions where atoms are present) are in a disordered array, it may be regarded as an amorphous film.

Examples of a method for forming an inorganic film may include a sol-gel method, and a vapor deposition method. Among them, a sol-gel method is preferable. By the sol-gel method, an amorphous film can be formed. That is, the inorganic film is preferably an amorphous film formed by the sol-gel method. Incidentally, the sol-gel method and the vapor deposition method are described in the section "B. Method for producing substrate provided with particles" below.

Here, whether the inorganic film is an inorganic film formed by the sol-gel method or not can be confirmed by a transmission electron microscopy (TEM) observation. In the inorganic film formed by the sol-gel method, an image including black spots (portions corresponding to micropores) in a disordered array tends to be observed. For example, when an inorganic film including silica is formed by the sol-gel method, using tetraethoxysilane (TEOS), an image including black spots, with a diameter of 1 nm or less, in a disordered array is often observed. In general, the density of the inorganic film (microstructure) depends largely on the method for forming the inorganic film. For example, silica films formed by the chemical vapor deposition method (CVD) are known to be denser than the silica films formed by the sol-gel method or the physical vapor deposition method (PVD). By observing the density of the inorganic film (microstructure), the method for forming the inorganic film can be estimated.

### 3. Fiber substrate

The fiber substrate in the present disclosure includes inorganic fiber.

The inorganic fiber is not particularly limited, and examples thereof may include glass fibers, ceramic fibers, and carbon fibers. Examples of the ceramic fibers may include alumina based fibers, silica fibers, zirconia fibers, silicon carbide fibers, and silicon nitride fibers. Examples of the alumina based fibers may include alumina fibers, alumina silica fibers, and mullite fibers.

Also, in addition to the fiber constituted from the inorganic material described above, fiber wherein organic fiber constituted from organic material is coated with inorganic material, organic-inorganic hybrid material or metal material; and fiber wherein metal fiber is coated with inorganic material, may be used.

The organic fiber is not particularly limited as long as it is organic fiber that can be coated with inorganic material, organic-inorganic hybrid material or metal material, and examples thereof may include polyester fibers and polyolefin fibers. Examples of the polyolefin constituting the polyolefin fibers may include polyethylene, polyethylene copolymers, polypropylene, and propylene copolymers.

The metal fiber is not particularly limited as long as it is a metal fiber that can be coated with inorganic materials.

The inorganic material is not particularly limited as long as it is an inorganic material that can coat the organic fiber or metal fiber, and examples thereof may include silica. Examples of the organic-inorganic hybrid material may include polysiloxane. The metal material is not particularly limited as long as it is a metal material that can coat the organic fiber.

The method for coating the organic fiber with the inorganic material is not particularly limited, and examples thereof may include a sol-gel method. Also, examples of the method for coating the organic fiber with the organic-inorganic hybrid material may include a method wherein the organic fiber is coated with an organic silicon compound, and heat-cured. Examples of the organic silicon compound may include alkoxysilane, silicone resin, and polysilazane. Known methods can be applied for the method for coating the organic fiber with the metal material, and the method for coating the metal fiber with the inorganic material.

Among them, the inorganic fiber constituted from the inorganic material is preferable. When the particles are photocatalytic particles, by using the inorganic fiber constituted from the inorganic material, the stability with respect to the radicals produced in the photocatalytic reaction can be improved.

Among the inorganic fiber constituted from the inorganic material, glass fibers and ceramic fibers are preferable. In particular, glass fibers and alumina based fibers are preferable. The glass fibers and alumina based fibers have excellent weather resistance, heat resistance, and chemical resistance. Further, glass fibers are preferable. Since the glass fibers are inexpensive, the production costs can be reduced.

The average fiber size of the inorganic fiber is not particularly limited, and is, for example, 1 µm or more and 50 µm or less, and may be 5 µm or more and 20 µm or less. Also, the average fiber diameter of the inorganic fiber may be, for example, 10 times or more and 20 times or less of the average particle diameter of the particles described below. When the average fiber diameter of the inorganic fiber is too large, the surface area of the inorganic fiber in the unit area of the fiber substrate tends to be smaller, which may reduce the amount of the particles fixed on the fiber substrate. Also, when the average fiber diameter of the inorganic fiber is too small, the void between inorganic fibers tends to be smaller in the fiber substrate, so that the particles are fixed flat only on the surface of the fiber substrate, which may reduce the amount of the particles fixed on the fiber substrate. Meanwhile, when the average fiber diameter of the inorganic fiber is in the above range, the surface area of the inorganic fiber in the unit area of the fiber substrate can be moderately increased while ensuring the size of the void, between inorganic fibers in the fiber substrate, large enough for particles to pass through. Therefore, the amount of the particles fixed on the fiber substrate can be increased.

Here, the fiber diameter of the inorganic fiber can be measured by scanning electron microscopy (SEM) observation. The average fiber diameter of the inorganic film is the arithmetic average value of the fiber diameter of 50 inorganic fibers measured by SEM observation.

Examples of the fiber substrate may include non-woven fabrics, woven fabrics, and knit fabrics. Among them, non-woven fabrics are preferable.

The inorganic fiber constituting the non-woven fabric may be a short fiber, and may be a long fiber. The length of the fiber is, for example, 1 mm or more and 30 mm or less. Also, in the non-woven fabric, the bonding method between the fibers may be any one of confounding, fusing and adhesive bonding. When the fibers are bonded together with an adhesive (binder), the adhesive (binder) is not particularly limited, and binders generally used for non-woven fabrics can be used. Examples of the binder may include acrylic resins, epoxy resins, polyvinyl alcohols, melamine resins, polyesters and polyvinyl chlorides.

The thickness of the fiber substrate is not specifically limited, and is appropriately selected according to the use application of the substrate provided with particles. Specifically, the thickness of the fiber substrate is 0.1 mm or more and 2 mm or less, may be 0.2 mm or more and 1 mm or less, and may be 0.3 mm or more and 0.5 mm or less. In general, the thicker the fiber substrate, the more particles that are fixed to the fiber substrate. However, in the case of photocatalytic particles, when the fiber substrate is too thick, it is difficult for light to reach deep layers of the fiber substrate, and there may be more photocatalytic particles that do not contribute to the activity. When the thickness of the fiber substrate is in the above range, photocatalytic particles can be utilized effectively.

Also, the weight per unit area of the fiber substrate is not specifically limited, and is appropriately selected according to the use application of the substrate provided with particles. Specifically, the weight per unit area of the fiber substrate is 5 g/m² or more and 200 g/m² or less, may be 10 g/m² or more and 100 g/m² or less, and may be 20 g/m² or more and 50 g/m² or less. In general, the larger the weight per unit area of the fiber substrate, the more particles that are fixed to the fiber substrate. However, in the case of photocatalytic particles, when the weight per unit area of the fiber substrate is too large, the fiber substrate gets too thick, so that there may be more photocatalytic particles that do not contribute to the activity, as described above. Also, when the weight per unit area of the fiber substrate is too large, the voids within the fiber substrate may be decreased, which may reduce the amount of the particles fixed on the fiber substrate, as described above. Meanwhile, when the weight per unit area of the fiber substrate is too small, the fiber substrate is thin, which may reduce the amount of the particles fixed on the fiber substrate.

### 4. Method for producing substrate provided with particles

The substrate provided with particles in the present disclosure may be produced by the method for producing a substrate provided with particles described below.

### B. Method for producing substrate provided with particles

The method for producing a substrate provided with particles in the present disclosure comprises: a functional group introduction step of introducing a functional group, that is positively or negatively charged in water, to a surface of the substrate; a particle electrostatic adsorption step of electrostatically adsorb particles onto the surface of the substrate to which the functional group is introduced; and after the particle electrostatic adsorption step, an inorganic film forming step of forming an inorganic film including an inorganic compound so as to cover the surface of the substrate.

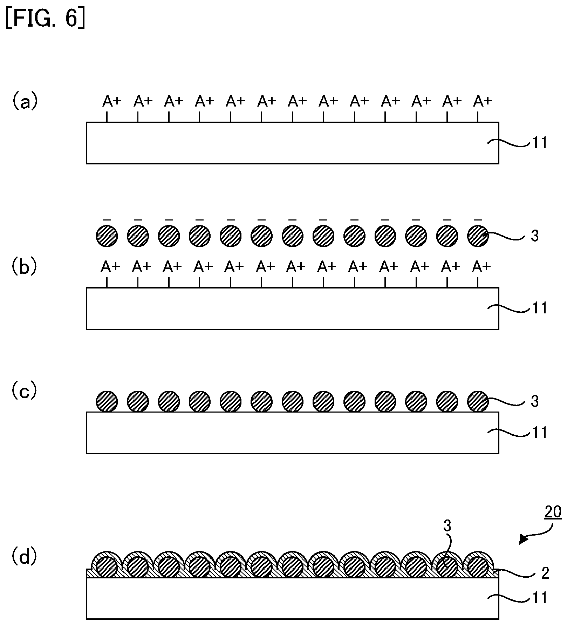

FIGS. 6(a) to (d) are process drawings exemplifying a method for producing a substrate provided with particles in the present disclosure. Firstly, as shown in FIG. 6(a), a functional group A, that is positively charged in water, is introduce to the surface of the substrate 11. Then, as shown in FIG. 6(b) and FIG. 6(c), particles 3, that are negatively charged in water, is electrostatically adsorbed to the surface of the substrate 11 to which the functional group A is introduced. Then, as shown in FIG. 6(d), an inorganic film 2 including an inorganic compound is formed so as to cover the surface of the fiber substrate 11. Thereby, a substrate provided with particles 20 is obtained.

In the present disclosure, by using the electrostatic adsorption, the particles can be adsorbed on the surface of the substrate at high densities.

Also, in the present disclosure, after the electrostatic adsorption of the particles onto the surface of the substrate, the particles are fixed on the surface of the substrate by forming relatively thin inorganic film so as to cover the surface of the substrate. Therefore, unlike the conventional cases where a layer is formed using a composition including particles and a binder, the particles can be suppressed from being buried in the binder. Also, since the particles are fixed by the inorganic film and are not buried in the binder, the particles can be in contact with materials in the external environment that gradually diffuse and pass through inside the inorganic film. Therefore, the function of the particles can be exhibited to a certain extent. At this time, as described above, when the inorganic film is a porous film including a large number of fine pores of the size in which the materials in the external environment can pass through, the utmost functions of the particles can be exhibited. Further, since the particles can be fixed on the surface of the substrate by the inorganic film, the fall of the particles can be suppressed.

Therefore, the particles can be fixed stably and at high densities on the surface of the fiber substrate while maintaining the functions of the particles.

Also, in the present disclosure, as a layer configured to fix the particles, an inorganic film including an inorganic compound is formed. Therefore, for example, when the particles are photocatalytic particles, the inorganic film are stable with respect to the radicals produced in the photocatalytic reaction. Thus, a substrate provided with particles having excellent durability can be produced.

The substrate and particles used for the method for producing a substrate provided with particles in the present disclosure; and each step of the method for producing a substrate provided with particles in the present disclosure are hereinafter explained.

### 1. Substrate

The aspects of the substrate used in the present disclosure are not particularly limited, and examples may include films, sheets, boards, fiber substrates, threads, fibers, beads, porous materials and columns. Examples of the fiber substrate may include non-woven fabrics, woven fabrics, and knit fabrics. The aspect of the thread is not particularly limited. The thread may be, for example, hollow thread, and may be solid-core thread.

Among them, the substrate is preferably a fiber substrate, and more preferably non-woven fabric. When the substrate is a fiber substrate, the substrate provided with particles can be produced by a roll-to-roll method. The fiber substrate is similar to the fiber substrate in the substrate provided with particles described above.

The material of the substrate is not limited, and examples may include inorganic materials, organic polymers, metals, and semiconductors. Examples of the inorganic material may include glass, ceramics, and carbons. Examples of the ceramics may include alumina based, silica, zirconia, silicon carbide, and silicon nitride. Examples of the alumina based may include alumina, alumina silica, and mullite. Also, examples of the organic polymer may include polyester, nylon, acrylic resins, polyethylene, polypropylene, polyvinyl chloride, phenolic resins, silicone resins, synthetic rubber, cellulose and triacetate. Examples of the metal may include gold, silver, copper, and aluminum. Examples of the semiconductor may include silicon, gallium arsenide, and indium phosphate.

Among them, the inorganic materials are preferable. For example, when the particles are photocatalytic particles, the substrate including the inorganic material is stable with respect to the radicals produced in the photocatalytic reaction.

Also, when the substrate is a fiber substrate, the preferable material for the substrate is similar to the contents described in the section "A. Substrate provided with particles" above.

The method for producing a substrate is appropriately selected according to the aspect and material of the substrate, and known methods can be applied. Commercially available products may be used as the substrate.

### 2. Particles

The particles used in the present disclosure are similar to the particles in the substrate provided with particles described above.

Here, the particle size of the particle can be measured by scanning electron microscopy (SEM) observation. The average particle size of the particles is the arithmetic average value of the particle sizes of 20 particles measured by SEM observation. Incidentally, when the shape of the particle is not spherical, the long diameter is regarded as the particle size.

Also, in the inorganic film forming step described below, the classified particles may be used to make the degree of coating of the inorganic film with respect to the particle constant.

### 3. Functional group introduction step

In the functional group introduction step in the present disclosure, a functional group, that is positively or negatively charged in water, is introduced to the surface of the substrate. By carrying out the functional group introduction step, the particles can be easily electrostatically adsorbed on the surface of the substrate to which the functional group has been introduced in the particle electrostatic adsorption step described below.

In the functional group, that is positively or negatively charged in water, whether it is positively charge or negatively charged is appropriately selected according to the particle.

The functional group positively charged in water is not particularly limited, and examples may include amino groups, ammonium groups, pyridinium groups, imidazole groups and guanidino groups.

Also, the functional group negatively charged in water is not particularly limited, and examples may include carboxy groups, sulfo groups, and phosphate groups.

In the functional group introduction step, by treating with a compound including a functional group that is positively or negatively charged in water, and a functional group that can be bonded with the functional group present on the surface of the substrate, the functional group, that is positively or negatively charged in water, can be introduced to the surface of the substrate.

The functional group that can be bonded with the functional group present on the surface of the substrate is appropriately selected according to the material of the substrate and the surface activation step described later. Examples of the functional group that can be bonded with the functional group present on the surface of the substrate may include alkoxy groups, hydroxy groups, acryloyl groups, epoxy groups, urethane groups, vinyl groups, and mercapto groups.

The compound including the functional group, that is positively or negatively charged in water, and the functional group that can be bonded with the functional group present on the surface of the substrate are appropriately selected according to these functional groups.

Examples of the compound including the functional group, that is positively charged in water, and the functional group that can be bonded with the functional group present on the surface of the substrate may include a compound including an amino group and an alkoxy group or hydroxy group. Examples of the compound including an amino group and an alkoxy group or hydroxy group may include a silane coupling agent including an amino group or its hydrolysate. Examples of the silane coupling agent including an amino group and its hydrolysate may include 3-aminopropyl trimethoxysilane and its hydrolysate, 3-aminopropyl triethoxysilane and its hydrolysate, 3-aminopropyl methyldimethoxysilane and its hydrolysate, 3-(2-aminoethylamino)propyl trimethoxysilane and its hydrolysate, 3-(2-aminoethylamino)propyl triethoxysilane and its hydrolysate, and 3-(2-aminoethylamino)propylmethyl dimethoxysilane and its hydrolysate. One type of the compound may be used alone, and two types or more may be used in a combination.

Examples of the compound including the functional group, that is negatively charged in water, and the functional group that can be bonded with the functional group present on the surface of the substrate may include N-(trimethoxysilyl)ethylenediamine triacetate sodium salt, 3-(trihydroxysilyl)-1-propanesulfonic acid, and 2-(4-chlorosulfonylphenyl)ethyltrimethoxysilane. One type of the compound may be used alone, and two types or more may be used in a combination.

Examples of the method for treating the surface of the substrate with the compound is not particularly limited, and examples may include a method wherein the surface of the substrate is coated with the compound, and a vapor deposition method. As the method for applying, known application methods can be applied, and examples may include a spray coating, a spin coating, and a dip coating. Also, examples of the vapor deposition method may include physical vapor deposition method (PVD) and chemical vapor deposition method (CVD). Examples of the PVD method may include a vacuum vapor deposition method, a sputtering method, and an ion plating method. Examples of the CVD method may include a thermal CVD method, a plasma CVD method, and a photo-CVD method.

When coating the surface of the substrate with the compound, a composition including the compound and an organic solvent may be used. When the compound is a silane coupling agent including an amino group or its hydrolysate, alcohols may be used as the organic solvent included in the composition. Examples of the alcohol may include methanol, ethanol, n-propyl alcohol, isopropyl alcohol, and n-butanol.

Also, when the silane coupling agent is used, the composition may further include water. When the composition includes water, the hydrolysis reaction of the silane coupling agent occurs in the composition. Due to this, the composition including the hydrolysate of the silane coupling agent is obtained as the compound.

Also, when the compound is a silane coupling agent including an amino group or its hydrolysate, the composition may further include water-soluble polymers. When the composition includes the water-soluble polymer, the dispersibility of the silane coupling agent including an amino group or its hydrolysate is improved. Therefore, the functional group, that is positively or negatively charged in water, can be uniformly introduced to the surface of the substrate. Also, as described below, when drying after applying the composition, the silane coupling agent including an amino group or its hydrolysate can be suppressed from being removed during drying. Examples of the water-soluble polymer may include polyvinylalcohol, ethylene-vinylalcohol copolymers, polyacrylic acid and polyethylene glycol. In particular, the polyvinyl alcohol is preferable.

Meanwhile, when the compound is a silane coupling agent including an amino group or its hydrolysate, the composition may not include water-soluble polymers. In this case, the introduction of the functional group, that is positively or negatively charged in water, to the surface of the substrate can be suppressed from being inhibited by the water-soluble polymers.

The content of the water-soluble polymer in the composition is, for example, 100 parts by mass or less, may be 10 parts by mass or less, and may be 1 part by mass or less, with respect to 100 parts by mass of the compound.

When the compound is a silane coupling agent including an amino group or its hydrolysate, the composition may be dried after applying the composition. The drying method is not particularly limited as long as it is a method that can dry at ordinary temperature, and examples may include air knife drying, spin drying, vacuum drying, and press drying. One type of the drying method may be used alone, and two types or more may be used in a combination.

Also, when the compound is a silane coupling agent including an amino group or its hydrolysate, after applying the composition and drying as necessary, a heat treatment is carried out. Thereby, the condensation reaction proceeds and the compound is fixed on the surface of the substrate. The temperature and time in the heat treatment are appropriately selected according to the type of the silane coupling agent. When the silane coupling agent including an amino group or its hydrolysate is used, the heating temperature is, for example, 40°C or more and 250°C or less, may be 70°C or more and 200°C or less, and may be 100°C or more and 150°C or less. Also, when the silane coupling agent including an amino group or its hydrolysate is used, the heating time is, for example, 10 seconds or more and 30 minutes or less, may be 30 seconds or more and 10 minutes or less, and may be 60 seconds or more and 5 minutes or less.

The thickness of the film including the compound is usually thin, and it is sufficient as long as the thickness is at least the thickness of the monomolecular film. The thickness of the film including the compound is, for example, 2 nm or more and 20 nm or less.

### 4. Particle electrostatic adsorption step

In the particle electrostatic adsorption step in the present disclosure, the particles are electrostatically adsorbed to the functional group, that is positively or negatively charged in water, introduced to the surface of the substrate. In the particle electrostatic adsorption step, the particles are electrostatically adsorbed on the surface of the substrate by utilizing the electrostatic interaction between the surface of the particles and the functional group, that is positively or negatively charged in water, introduced to the surface of the substrate in the functional group introduction step.

Incidentally, when the surface of the particle is completely or hardly charged, the organic polymer adsorption step is preferably carried out as described below.

In the particle electrostatic adsorption step, by coating the surface of the substrate with a composition including the particles, water, and organic solvent, the particles can be electrostatically adsorbed to the surface of the substrate to which the functional group, that is positively or negatively charged in water, is introduced. As the method for applying, known application methods can be applied, and examples may include a spray coating, a spin coating, and a dip coating.

As an organic solvent included in the composition, alcohols may be used. Examples of the alcohol may include methanol, ethanol, n-propyl alcohol, isopropyl alcohol, and n-butanol.

Also, the composition may further include water-soluble polymers. Examples of the water-soluble polymer may include polyvinylalcohol, ethylene-vinylalcohol copolymers, polyacrylic acid and polyethylene glycol.

After applying the composition, it may be dried. The drying method is not particularly limited, and examples may include air knife drying, heat drying, vacuum drying, spin drying, and press drying. One type of the drying method may be used alone, and two types or more may be used in a combination.

Among them, when the substrate is a fiber substrate, and the method for forming the inorganic film in the inorganic film forming step described later is a sol-gel method, heat-drying is preferable. By sufficiently drying the fiber substrate by heat drying, the composition including the metal alkoxide, water and solvent can easily penetrate into the fiber substrate, which is a substrate, in the inorganic film forming step. Thereby, the inorganic film can be uniformly formed on the entire surface of the fiber substrate which is a substrate.

In the case of the heat drying, the drying temperature and drying time are selected as appropriate according to, for example, the type of the particles and the type and amount of the solvent. The drying temperature is, for example, 40°C or more and 250°C or less, may be 70°C or more and 200°C or less, and may be 100°C or more and 150°C or less. Also, the drying time is, for example, 10 seconds or more and 30 minutes or less, may be 30 seconds or more and 10 minutes or less, and may be 60 seconds or more and 5 minutes or less.

### 5. Inorganic film forming step

After the particle electrostatic adsorption step, in the inorganic film forming step in the present disclosure, an inorganic film including an inorganic compound is formed so as to cover the surface of the substrate. By carrying out the inorganic film forming step, the electrostatically adsorbed particles can be strongly fixed on the surface of the substrate, and the fall of the particles can be suppressed.

The inorganic compound is similar to the inorganic compound used for the inorganic film in the substrate provided with particles described above.

The method for forming an inorganic film is not particularly limited as long as it is a method wherein an inorganic film can be formed so as to cover the surface of the substrate, and examples may include a sol-gel method, and a vapor deposition method.

Also, when the inorganic compound is silica, the method for forming an inorganic film is preferably a method wherein the surface of the substrate is treated with an organic silicon compound. Examples of the method for treating the surface of the substrate with an organic silicon compound may include a sol-gel method, and a vapor deposition method, as described above.

Examples of the vapor deposition method may include physical vapor deposition method (PVD) and chemical vapor deposition method (CVD). Examples of the PVD method may include a vacuum vapor deposition method, a sputtering method, and an ion plating method. Examples of the CVD method may include a thermal CVD method, a plasma CVD method, and a photo-CVD method.

Among them, a sol-gel method is preferable.

In the sol-gel method, a composition including metal alkoxide, water and organic solvent is prepared, the surface of the substrate is coated with the composition, and heat treated. In the composition, hydrolysis reaction and polycondensation reaction of the metal alkoxide proceed. Further, due to the heat treatment, an inorganic oxide is formed.

Examples of the metal alkoxide used for the composition may include the metal alkoxides represented by the following general formula (1).

R¹ₙM(OR²)ₘ (1)

(In the formula (1), R¹ and R² respectively and independently represent 1-8C organic groups, M represents a metal atom, "n" represents an integer of 0 or more, "m" represents an integer of 1 or more, and n + m represents an atomic valence of M.)

Examples of the metal atom M may include silicon, zirconium, titanium and aluminum. Among the above, silicon is preferable.

Examples of the organic groups represented by R¹ and R² may include alkyl groups. Examples of the alkyl group may include methyl groups, ethyl groups, n-propyl groups, isopropyl groups, n-butyl groups, and isobutyl groups. In the identical molecule, these alkyl groups may be identical, and may be different.

The "n" is preferably 0.

The metal alkoxide is not particularly limited. For example, the metal alkoxide wherein the metal atom M is silicon and the "n" is 0 is tetraalkoxysilane. Examples of the tetraalkoxysilane may include tetramethoxysilane, tetraethoxysilane, tetrapropoxysilane and tetrabutoxysilane. One type of the metal alkoxide may be used alone, and two types or more may be used in a combination.

In the composition, the metal alkoxide may be partially hydrolyzed, and may be partially condensed to form an oligomer. That is, the composition may include hydrolysate or hydrolytic polycondensate of the metal alkoxide.

As an organic solvent included in the composition, alcohols may be used. Examples of the alcohol may include methanol, ethanol, n-propyl alcohol, isopropyl alcohol, and n-butanol.

Also, the composition may further include water-soluble polymers. When the composition includes the water-soluble polymer, the dispersibility of the metal alkoxide or its hydrolysate or hydrolytic polycondensate is improved. Therefore, the inorganic film can be uniformly formed on the surface of the substrate. Also, as described below, when drying after applying the composition, the removal of the metal alkoxide or its hydrolysate or hydrolytic polycondensate can be suppressed during drying. Examples of the water-soluble polymer may include polyvinylalcohol, ethylene-vinylalcohol copolymers, polyacrylic acid and polyethylene glycol. In particular, the polyvinyl alcohol is preferable. The polyvinyl alcohol is generally obtained by saponifying polyvinyl acetate. The polyvinyl alcohol may be a partially-saponified polyvinyl alcohol with a few tens of % of acetate group remaining, and may be a fully-saponified polyvinyl alcohol with no acetic acid group remaining, and the fully-saponified polyvinyl alcohol is preferable. Also, the degree of polymerization of the polyvinyl alcohol is, for example, 1500 or more and 2000 or less.

The content of the water-soluble polymer in the composition is, for example, 1 part by mass or more and 100 parts by mass or less, may be 5 parts by mass or more and 50 parts by mass or less, and may be 10 parts by mass or more and 25 parts by mass or less, with respect to 100 parts by mass of the compound.

If necessary, the composition may include, for example, a catalyst that accelerates the hydrolysis reaction of the metal alkoxide, or a stabilizer configured to control the polycondensation reaction of the metal alkoxide. Examples of the catalyst may include hydrochloric acid, sulfuric acid, nitric acid, and carboxylic acid. Examples of the stabilizer may include acetylacetone, amino alcohols, alkylamines, and N,N-dimethylformamide. Incidentally, when the tetraethoxysilane (TEOS) is used, the stabilizer may not be added.

As the method for applying the composition, known application methods can be applied, and examples may include a spray coating, a spin coating, and a dip coating.

When applying the composition, the degree of covering of the inorganic film with respect to the particles can be controlled by adjusting the application conditions.

After applying the composition, it may be dried. The drying method is not particularly limited as long as it is a method that can dry at ordinary temperature, and examples may include air knife drying, spin drying, vacuum drying, and press drying. One type of the drying method may be used alone, and two types or more may be used in a combination.

After applying the composition and drying as necessary, a heat treatment is carried out. The temperature and time in the heat treatment are not particularly limited as long as the inorganic oxide is obtained, and appropriately selected according to, for example, the type of the metal alkoxide. The heating temperature is, for example, 40°C or more and 250°C or less, may be 70°C or more and 200°C or less, and may be 100°C or more and 150°C or less. Also, the heating time is, for example, 10 seconds or more and 30 minutes or less, may be 30 seconds or more and 10 minutes or less, and may be 60 seconds or more and 5 minutes or less.

Also, in the method wherein the surface of the substrate is treated with the organic silicon compound, as described above, the organic silicon compound is preferably the tetraalkoxysilane or its hydrolysate or hydrolytic polycondensate.

The thickness of the inorganic film is similar to the thickness of the inorganic film in the substrate provided with particles described above.

### 6. Surface activation step

Prior to the functional group introduction step, the method for producing a substrate provided with particles in the present disclosure may comprise a surface activation step of subjecting the surface of the substrate to a surface activating treatment. By carrying out the surface activation step, it makes easier to introduce a predetermined functional group to the surface of the substrate in the functional group introduction step.

Examples of the surface activating treatment may include physical treatment, chemical treatment, and thin film formation.

Examples of the physical treatment may include a corona treatment, a plasma treatment, an ultraviolet ray treatment, an electron beam treatment, and flame treatment.

Examples of the chemical treatment may include a solvent treatment, and a chemical agent treatment.

In the case of the thin film formation, examples of the thin film may include inorganic films including inorganic compounds. The inorganic film is similar to the inorganic film in the inorganic film forming step. Also, the method for forming a thin film is similar to the method for forming the inorganic film in the inorganic film forming step described above.

### 7. Organic polymer adsorption step

Prior to the particle electrostatic adsorption step, the method for producing a substrate provided with particles in the present disclosure may comprise an organic polymer adsorption step of adsorbing an organic polymer, that is charged at least one of positively or negatively in water, onto the surface of the particle. In this case, the functional group, that is positively or negatively charged in water, introduced to the surface of the substrate, and the organic polymer acquire opposite charges from each other in water. Incidentally, when the organic polymer includes both positive and negative charges in the molecule, the net charge in water is considered.

When the surface of the particle is completely or hardly charged, the organic polymer adsorption step is preferably carried out.

The organic polymer has only to be an organic polymer including a functional group that is positively or negatively charged in water. The functional group that is positively or negatively charged in water included in the organic polymer is similar to the functional group that is positively or negatively charged in water used in the functional group introduction step.

The organic polymer positively charged in water is not particularly limited, and examples may include polyethylene imine.

The organic polymer negatively charged in water is not particularly limited, and examples may include polycarboxylic acids. Examples of the polycarboxylic acids may include polyacrylic acid and polymethacrylic acid.

Also, the organic polymer may include both of the functional group that is positively charged in water and the functional group that is negatively charged in water. Examples of such organic polymer may include gelatin and collagen.

The weight average molecular weight of the organic polymer is, for example, 10,000 or more and 1,000,000 or less, and may be 50,000 or more and 250,000 or less. Incidentally, the weight average molecular weight is a value measured, by gel permeation chromatography (GPC), using polystyrene as the reference material.

In the organic polymer adsorption step, the organic polymer can be adsorbed on the surface of the particles by dispersing the particles into composition including the organic polymer.

The composition may include the organic polymer and a solvent. The solvent is appropriately selected according to the type of the organic polymer, and examples may include water. That is, as the composition, an aqueous solution, including the organic polymer dissolved therein, may be used.

After dissolving the particles into the composition, the particles may be washed. Thereby, the unadsorbed organic polymer may be removed.

### 8. Others

The method for producing a substrate provided with particles in the present disclosure may be carried out by a single-wafer method, and may be carried out by a roll-to-roll method. In the case of the roll-to-roll method, the roll-to-roll method may be applied for each step, and each step may be carried out continuously by the roll-to-roll method.

In the substrate provided with particles produced by the method for producing a substrate provided with particles in the present disclosure, the amount of the particles is not particularly limited as long as it is an amount wherein the functions of the particles can be exhibited, and it is set appropriately according to the type of the particle, and the use application of the substrate provided with particles. The amount of particles in the substrate provided with particles corresponds to the mass increase before and after the particle electrostatic adsorption step. Therefore, the particle fixed ratio is defined as the following formula (1). Particle fixed ratio [%] = (mass of particles fixed on substrate)/(mass of substrate provided with particles) = (mass after particle electrostatic adsorption step - mass before particle electrostatic adsorption step)/(mass of substrate provided with particle)

The particle fixed ratio is preferably, for example, 1% or more and 50% or less, and more preferably 5% or more and 25% or less.

Incidentally, the present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

### EXAMPLE

Hereinafter, the present disclosure will further be described by way of Examples and Comparative Examples.

### [Example 1]

### (1) Surface activation step

Chemical solution 1 having the following composition was prepared. Chemical solution 1 was stirred for 30 minutes at ordinary temperature and became a uniform colorless transparent solution. Incidentally, a commercially available product was used as it was for the tetraethoxysilane.

### <Chemical Solution 1>

| | |
|---|---|
| Tetraethoxysilane (from Tokyo Chemical Industry Co., Ltd.) | 5.5 g |
| IPA | 1.5 g |
| Pure water | 7.5 g |
| Hydrochloricacid (0.5 M) | 180 µL |

Chemical solution 2 having the following composition was prepared. Chemical solution 2 was stirred for 20 minutes at liquid temperature of 80°C to 90°C and became a uniform colorless transparent solution. Incidentally, for the polyvinyl alcohol (polymerization rate of 1500, completely saponified type), a product from FUJIFILM Wako Pure Chemical Corporation was used as it was.

### <Chemical Solution 2>

| | |
|---|---|
| Polyvinyl alcohol(polymerization rate of 1500, completely solidifiedtype) (from FUJIFILM Wako Pure Chemical Corporation) | 2.5 g |
| Pure water | 47.5 g |

Paint A having the following composition was prepared. Paint A was stirred for 1 minutes at ordinary temperature and became a uniform colorless transparent solution.

### <Paint A>

| | |
|---|---|
| Chemical solution 1 | 12.5 g |
| Chemical solution 2 | 17.5 g |

Glass fiber non-woven fabric cut into a size of 5 cm square (mass: 65.9 mg, thickness: 0.20 mm, weight per unit area: 25 g/m², fiber diameter: 10 µm) was immersed into paint A and immediately pulled up. After removing excess paint A by centrifugal operation (centrifugal force 500 × g, 1 minute), it was heated at 180°C for 2 minutes. As a result, the mass increased by 1.6 mg. Incidentally, the mass was measured using an electronic balance (model number: AB104-S from METTLER TOLEDO, minimum indication: 0.1 mg).

### (2) Functional group introduction step

Paint B having the following composition was prepared. Paint B was stirred for 10 minutes at ordinary temperature and became a uniform colorless transparent solution. Incidentally, a commercially available product was used as it was for the 3-aminopropyltrimethoxysilane.

### <Paint B>

| | |
|---|---|
| 3-Aminopropyltrimethoxysilane (from Tokyo Chemical Industry, Co., Ltd.) | 1.0 g |
| IPA | 5.0 g |
| Pure water | 45.0 g |

The glass fiber non-woven fabric after the surface activation step was immersed into the paint B. After confirming that paint B has penetrated well into the glass fiber non-woven fabric, the glass fiber non-woven fabric was pulled up immediately. After removing excess paint B by centrifugal operation (centrifugal force 500 × g, 1 minute), it was heated at 180°C for 2 minutes. No increase in mass was confirmed.

### (3) Synthesis of polymethylsilsesquioxane particles

Polymethylsilsesquioxane (PMSQ) particles were synthesized by the following procedure. Firstly, 10 g of methyltriethoxysilane (from Tokyo Chemical Industry Co., Ltd.), 8 g of ethanol, and 1 g of hydrochloric acid (0.1 M) were stirred at ordinary temperature for 30 minutes. To there, 70 mL of sodium dodecyl sulfate solution (0.01% by mass) and 10 mL of ammonia water (29% by mass) were added and stirred for 30 minutes. The formed particles were settled by centrifugation and the supernatant fluid was removed.

The settled particles were then dispersed in 15 mL of IPA, and 15 g of sodium hydroxide solution (50 mM) was added. After 15 minutes, the particles were settled by centrifugation, and the supernatant fluid was removed.

### (4) Organic polymer adsorption step

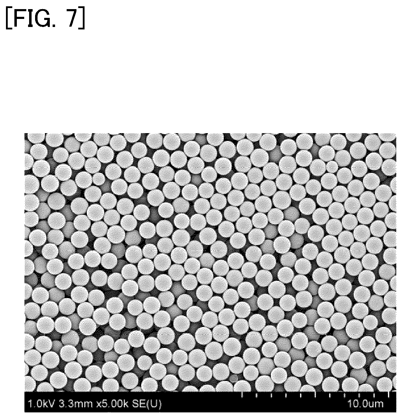

The PMSQ particles were dispersed into 20 g of gelatin aqueous solution (0.05%) and stirred for 60 minutes. Then, the particles were settled by centrifugation and the supernatant fluid was removed. The settled particles were dispersed in 40 mL of pure water, settled by centrifugation again, and the supernatant fluid was removed. Finally, the settled particles were dispersed in methanol aqueous solution (10 wt%) (solid content concentration: 2.4% by mass). According to SEM observation, the average particle size of the PMSQ particles was approximately 1 µm. The SEM photograph is shown in FIG. 7.

### (5) Particle electrostatic adsorption step

The glass fiber non-woven fabric after the functional group introduction step was immersed into the dispersion solution of the PMSQ particles wherein gelatin was adsorbed on the surface. After confirming that dispersion solution has penetrated well into the glass fiber non-woven fabric, the glass fiber non-woven fabric was pulled up immediately. After removing excess dispersion solution by centrifugal operation (centrifugal force 500 × g, 1 minute), it was heated at 180°C for 2 minutes. As a result, the mass increased by 4.4 mg.

### (6) Inorganic film forming step

The glass fiber non-woven fabric after the particle electrostatic adsorption step was immersed into the paint A. After confirming that paint A has penetrated well into the glass fiber non-woven fabric, the glass fiber non-woven fabric was pulled up immediately. After removing excess paint A by centrifugal operation (centrifugal force 500 × g, 1 minute), it was heated at 180°C for 2 minutes. As a result, the mass increased by 2.2 mg. The final mass of the substrate provided with particles was 74.7 mg, and the particle fixed ratio was 5.9%.

### (7) Evaluation

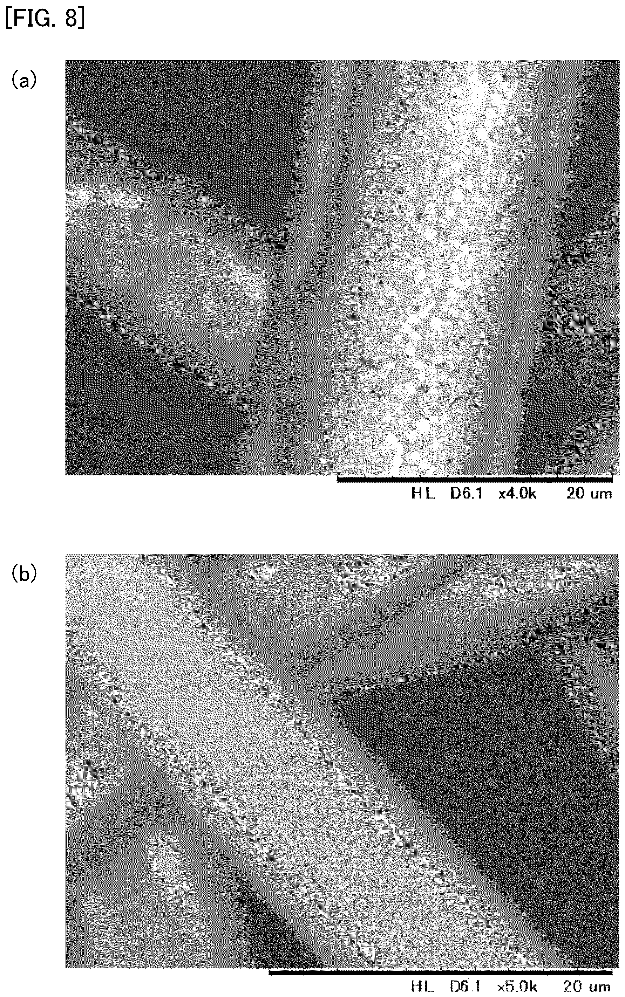

SEM observation of the obtained substrate provided with particles showed that the PMSQ particles were fixed at high densities in a condition covered with a silica film. FIG. 8(b) shows a SEM photograph of glass fiber non-woven fabric before the particles are fixed, and FIG. 8(a) shows a SEM photograph of the substrate provided with particles. The PMSQ particles did not fall out, even when the substrate provided with particles was subjected to an ultrasonic process in water. Also, the PMSQ particles did not adhere to a finger, even when the substrate provided with particles was gently rubbed with the finger.

### [Example 2]

### (1) Surface activation step and functional group introduction step

The surface activation step and functional group introduction step were carried out in the same manner as in Example 1 except that the glass fiber non-woven fabric cut into a size of 5 cm square (mass: 66.3 mg, thickness: 0.20 mm, weight per unit area: 25 g/m², fiber diameter: 10 µm) was used.

### (2) Particle electrostatic adsorption step

Titanium oxide water dispersion solution (2% by mass) was prepared using titanium oxide particles (from KANTO CHEMICAL CO., INC., particle size: 0.1 µm or more and 0.3 µm or less). Incidentally, since titanium oxide particles are inherently negatively charged in water, the organic polymer adsorption step is not necessary.

The glass fiber non-woven fabric after the functional group introduction step was immersed into the titanium oxide water dispersion solution. After confirming that the titanium oxide water dispersion solution has penetrated well into the glass fiber non-woven fabric, the glass fiber non-woven fabric was pulled up immediately. After removing excess titanium oxide water dispersion solution by centrifugal operation (centrifugal force 500 × g, 1 minute), it was heated at 180°C for 2 minutes. As a result, the mass increased by 3.7 mg.

### (3) Inorganic film forming step

The glass fiber non-woven fabric after the particle electrostatic adsorption step was immersed into the paint A. After confirming that paint has penetrated well into the glass fiber non-woven fabric, the glass fiber non-woven fabric was pulled up immediately. After removing excess paint by centrifugal operation (centrifugal force 500 × g, 1 minute), it was heated at 180°C for 2 minutes. As a result, the mass increased by 1.7 mg. The final mass of the substrate provided with particles was 72.4 mg, and the particle fixed ratio was 5.1%.

### (4) Evaluation

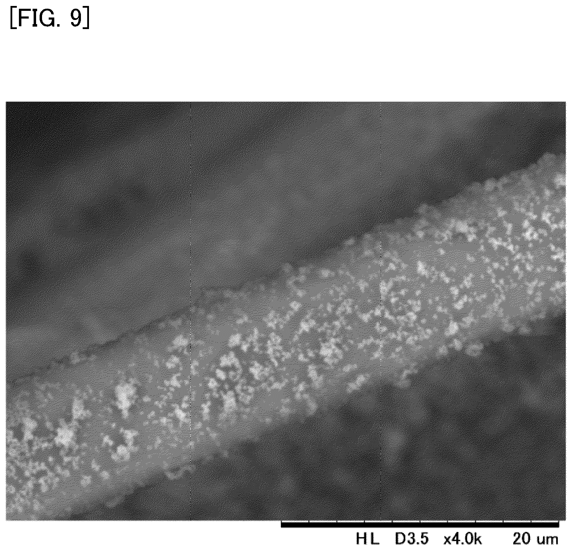

SEM observation of the obtained substrate provided with particles showed that the titanium oxide particles were fixed at high densities in a condition covered with a silica film. The SEM photograph is shown in FIG. 9. The titanium oxide particles did not fall out, even when the substrate provided with particles was subjected to an ultrasonic process in water. Also, the titanium oxide particles did not adhere to a finger, even when the substrate provided with particles was gently rubbed with the finger.

Also, a part of the silica film of the substrate provided with particles was intentionally destroyed, a SEM observation of the cross-section of the silica film was carried out, and the thickness of the silica film was appropriately 50 nm. Further, a TEM observation of the flake of the destroyed silica film was carried out, and an image of black spots arranged in a disordered manner was observed. This is a distinguishing observation image of amorphous films, and from the size of these spots, the fine pore size was estimated to be 1 nm or less.

### [Example 3]

In the inorganic film forming step, a substrate provided with particles was prepared in the same manner as in Example 2 except that the paint A was diluted twofold with pure water. At this time, the thickness of the silica film was estimated to be 10 nm since the mass increased by 0.3 mg in the inorganic film forming step. The titanium oxide particles did not fall out, even when the substrate provided with particles was subjected to an ultrasonic process in water. Also, the titanium oxide particles did not adhere to a finger, even when the substrate provided with particles was gently rubbed with the finger.

### [Example 4]

In the inorganic film forming step, a substrate provided with particles was prepared in the same manner as in Example 2 except that the paint A was diluted fourfold with pure water. At this time, the thickness of the silica film was estimated to be 3 nm since the mass increased by 0.1 mg in the inorganic film forming step. The titanium oxide particles did not fall out, even when the substrate provided with particles was subjected to an ultrasonic process in water. Also, the titanium oxide particles did not adhere to a finger, even when the substrate provided with particles was gently rubbed with the finger.

### [Example 5]

In the particle electrostatic adsorption step, a substrate provided with particles was prepared in the same manner as in Example 2 except that polystyrene (PS) particles (from Merck KGaA, particle size of 5 µm) were used. At this time, the thickness of the silica film was estimated to be 79 nm since the mass increased by 2.7 mg in the inorganic film forming step. The polystyrene particles did not fall out, even when the substrate provided with particles was subjected to an ultrasonic process in water. Also, the polystyrene particles did not adhere to a finger, even when the substrate provided with particles was gently rubbed with the finger.

### [Comparative Example 1]

A substrate provided with particles was prepared in the same manner as in Example 1 except that the inorganic film forming step was not carried out. Most of the PMSQ particles fell out, when the obtained substrate provided with particles was subjected to an ultrasonic process in water. Also, the PMSQ particles adhered to a finger, when the substrate provided with particles was gently rubbed with the finger. From this, it was found that the inorganic film forming step is indispensable for preventing particles from falling off.

The data of Examples and Comparative Example described above are shown in Table 1.

**[Table 1]**

| | Example 1 | Example 2 | Example 3 | Example 4 | Example 5 | Comp. Ex. 1 |
|---|---|---|---|---|---|---|
| Particles | PMSQ particles | Titanium oxide particles | Titanium oxide particles | Titanium oxide particles | PS particles | Titanium oxide particles |
| Average particle size (µm) | 1 | 0.2 | 0.2 | 0.2 | 5 | 0.2 |
| Particle fixed ratio (%) | 5.9 | 5.1 | 4.9 | 5.5 | 3.9 | 5.3 |
| Mass of silica film (mg) | 2.2 | 1.7 | 0.3 | 0.1 | 2.7 | 0 |
| Thickness of silica film (nm) | 65 | 50 | 10 | 3 | 79 | 0 |
| Fall of particles | No | No | No | No | No | Yes |

The present disclosure provides the following [1] to [18].
[1] Provides a substrate provided with particles comprising:
   a fiber substrate including an inorganic fiber;
   an inorganic film disposed on a surface of the fiber substrate and includes an inorganic compound; and
   functional particles fixed, by the inorganic film, on the surface of the fiber substrate.
[2] The substrate provided with particles according to [1], wherein a thickness of the inorganic film is 2 nm or more and 100 nm or less.
[3] The substrate provided with particles according to [1] or [2], wherein the inorganic film is a porous film.
[4] The substrate provided with particles according to any one of [1] to [3], wherein an average particle size of the functional particles is 0.1 µm or more and 10 µm or less.
[5] The substrate provided with particles according to any one of [1] to [4], wherein the functional particles are photocatalytic particles.
[6] The substrate provided with particles according to any one of [1] to [5], wherein the inorganic compound is silica.
[7] The substrate provided with particles according to any one of [1] to [6], wherein the inorganic fiber is a glass fiber or an alumina based fiber.
[8] A method for producing a substrate provided with particles, the method comprising:
   a functional group introduction step of introducing a functional group, that is positively or negatively charged in water, to a surface of a substrate;
   a particle electrostatic adsorption step of electrostatically adsorb functional particles onto the surface of the substrate to which the functional group is introduced; and
   after the particle electrostatic adsorption step, an inorganic film forming step of forming an inorganic film including an inorganic compound so as to cover the surface of the substrate.
[9] The method for producing a substrate provided with particles according to [8], wherein an average particle size of the functional particles is 0.1 µm or more and 10 µm or less.
[10] The method for producing a substrate provided with particles according to [8] or [9], wherein the functional particles are photocatalytic particles.
[11] The method for producing a substrate provided with particles according to any one of [8] to [10], wherein the inorganic compound is silica, and
   in the inorganic film forming step, the surface of the substrate is treated with an organic silicon compound.
[12] The method for producing a substrate provided with particles according to [11], wherein the organic silicon compound is tetraalkoxysilane or its hydrolysate or hydrolytic polycondensate.
[13] The method for producing a substrate provided with particles according to any one of [8] to [12], wherein in the functional group introduction step, the surface of the substrate is treated with a silane coupling agent including an amino group or a hydrolysate of the silane coupling agent including an amino group.
[14] The method for producing a substrate provided with particles according to any one of [8] to [13], wherein, prior to the functional group introduction step, the method comprises a surface activation step of subjecting the surface of the substrate to a surface activating treatment.
[15] The method for producing a substrate provided with particles according to any one of [7] to [13], wherein, prior to the particle electrostatic adsorption step, the method comprises an organic polymer adsorption step of adsorbing an organic polymer, that is charged at least either one of positively or negatively in water, onto a surface of the functional particle; and the functional group and the organic polymer acquire opposite charges from each other in water.
[16] The method for producing a substrate provided with particles according to any one of [8] to [15], wherein the substrate is a fiber substrate.
[17] The method for producing a substrate provided with particles according to [16], wherein the fiber substrate includes an inorganic fiber.
[18] The method for producing a substrate provided with particles according to [17], wherein the inorganic fiber is a glass fiber or an alumina based fiber.

### Reference Signs List

- 1:: fiber substrate
- 2:: inorganic film
- 3:: particle
- 10:: substrate provided with particles
- 11:: substrate
- 20:: substrate provided with particles

## Claims

1. A substrate provided with particles comprising:
a fiber substrate including an inorganic fiber;
an inorganic film disposed on a surface of the fiber substrate and includes an inorganic compound; and
functional particles fixed, by the inorganic film, on the surface of the fiber substrate.

2. The substrate provided with particles according to claim 1, wherein a thickness of the inorganic film is 2 nm or more and 100 nm or less.

3. The substrate provided with particles according to claim 1 or 2, wherein the inorganic film is a porous film.

4. The substrate provided with particles according to claim 1 or 2, wherein an average particle size of the functional particles is 0.1 µm or more and 10 µm or less.

5. The substrate provided with particles according to claim 1 or 2, wherein the functional particles are photocatalytic particles.

6. The substrate provided with particles according to claim 1 or 2, wherein the inorganic compound is silica.

7. The substrate provided with particles according to claim 1 or 2, wherein the inorganic fiber is a glass fiber or an alumina based fiber.

8. A method for producing a substrate provided with particles, the method comprising:
a functional group introduction step of introducing a functional group, that is positively or negatively charged in water, to a surface of a substrate;
a particle electrostatic adsorption step of electrostatically adsorb functional particles onto the surface of the substrate to which the functional group is introduced; and
after the particle electrostatic adsorption step, an inorganic film forming step of forming an inorganic film including an inorganic compound so as to cover the surface of the substrate.

9. The method for producing a substrate provided with particles according to claim 8, wherein an average particle size of the functional particles is 0.1 µm or more and 10 µm or less.

10. The method for producing a substrate provided with particles according to claim 8 or 9, wherein the functional particles are photocatalytic particles.

11. The method for producing a substrate provided with particles according to claim 8 or **9,** wherein the inorganic compound is silica, and
in the inorganic film forming step, the surface of the substrate is treated with an organic silicon compound.

12. The method for producing a substrate provided with particles according to claim 11, wherein the organic silicon compound is tetraalkoxysilane or its hydrolysate or hydrolytic polycondensate.

13. The method for producing a substrate provided with particles according to claim 8 or **9,** wherein in the functional group introduction step, the surface of the substrate is treated with a silane coupling agent including an amino group or a hydrolysate of the silane coupling agent including an amino group.

14. The method for producing a substrate provided with particles according to claim 8 or **9,** wherein, prior to the functional group introduction step, the method comprises a surface activation step of subjecting the surface of the substrate to a surface activating treatment.

15. The method for producing a substrate provided with particles according to claim 8 or 9, wherein, prior to the particle electrostatic adsorption step, the method comprises an organic polymer adsorption step of adsorbing an organic polymer, that is charged at least either one of positively or negatively in water, onto a surface of the functional particle; and the functional group and the organic polymer acquire opposite charges from each other in water.

16. The method for producing a substrate provided with particles according to claim 8 or 9, wherein the substrate is a fiber substrate.

17. The method for producing a substrate provided with particles according to claim 16, wherein the fiber substrate includes an inorganic fiber.

18. The method for producing a substrate provided with particles according to claim 17, wherein the inorganic fiber is a glass fiber or an alumina based fiber.

## Amended claims

### Amended claims under Art. 19.1 PCT

1. (Amended) A substrate provided with particles comprising:
a fiber substrate including an inorganic fiber;
an inorganic film disposed on a surface of the fiber substrate and includes an inorganic compound; and
functional particles fixed, by the inorganic film, on the surface of the fiber substrate, wherein
a thickness of the inorganic film is less than an average particle size of the functional particles.

2. The substrate provided with particles according to claim 1, wherein a thickness of the inorganic film is 2 nm or more and 100 nm or less.

3. The substrate provided with particles according to claim 1 or 2, wherein the inorganic film is a porous film.

4. The substrate provided with particles according to claim 1 or 2, wherein an average particle size of the functional particles is 0.1 µm or more and 10 µm or less.

5. The substrate provided with particles according to claim 1 or 2, wherein the functional particles are photocatalytic particles.

6. The substrate provided with particles according to claim 1 or 2, wherein the inorganic compound is silica.

7. The substrate provided with particles according to claim 1 or 2, wherein the inorganic fiber is a glass fiber or an alumina based fiber.

8. A method for producing a substrate provided with particles, the method comprising:
a functional group introduction step of introducing a functional group, that is positively or negatively charged in water, to a surface of a substrate;
a particle electrostatic adsorption step of electrostatically adsorb functional particles onto the surface of the substrate to which the functional group is introduced; and
after the particle electrostatic adsorption step, an inorganic film forming step of forming an inorganic film including an inorganic compound so as to cover the surface of the substrate.

9. The method for producing a substrate provided with particles according to claim 8, wherein an average particle size of the functional particles is 0.1 µm or more and 10 µm or less.

10. The method for producing a substrate provided with particles according to claim 8 or 9, wherein the functional particles are photocatalytic particles.

11. The method for producing a substrate provided with particles according to claim 8 or 9, wherein the inorganic compound is silica, and
in the inorganic film forming step, the surface of the substrate is treated with an organic silicon compound.

12. The method for producing a substrate provided with particles according to claim 11, wherein the organic silicon compound is tetraalkoxysilane or its hydrolysate or hydrolytic polycondensate.

13. The method for producing a substrate provided with particles according to claim 8 or 9, wherein in the functional group introduction step, the surface of the substrate is treated with a silane coupling agent including an amino group or a hydrolysate of the silane coupling agent including an amino group.

14. The method for producing a substrate provided with particles according to claim 8 or 9, wherein, prior to the functional group introduction step, the method comprises a surface activation step of subjecting the surface of the substrate to a surface activating treatment.

15. The method for producing a substrate provided with particles according to claim 8 or 9, wherein, prior to the particle electrostatic adsorption step, the method comprises an organic polymer adsorption step of adsorbing an organic polymer, that is charged at least either one of positively or negatively in water, onto a surface of the functional particle; and the functional group and the organic polymer acquire opposite charges from each other in water.

16. The method for producing a substrate provided with particles according to claim 8 or 9, wherein the substrate is a fiber substrate.

17. The method for producing a substrate provided with particles according to claim 16, wherein the fiber substrate includes an inorganic fiber.

18. The method for producing a substrate provided with particles according to claim 17, wherein the inorganic fiber is a glass fiber or an alumina based fiber.

## Amended claims

### Amended claims under Art. 19.1 PCT

1. Summary of Search Report
The novelty and inventiveness of the inventions according to claims 1, 7 are denied by Reference 1.
The inventiveness of the inventions according to claims 2-4, 6 are denied by Reference 1.
The novelty and inventiveness of the inventions according to claims 1, 3, 6, 7 are denied by Reference 2.
The inventiveness of the inventions according to claims 2, 5 are denied by Reference 2.
The novelty and inventiveness of the invention according to claim 1 is denied by Reference 3.
The inventiveness of the invention according to claim 4 is denied by Reference 3.
The inventiveness of the inventions according to claims 1-4, 7 are denied by Reference 4.
Meanwhile, the inventions according to claims 8-18 are determined to be novel and inventive.
• Reference 1: JP59-47479A
• Reference 2: JP2001-504403A
• Reference 3: EP2281961A1
• Reference 4: JP2005-280164A
• Reference 5: JP2019-85291A
• Reference 6: JP2019-157292A

2. Comparison of present invention and cited inventions
(1) In relation to present invention
In the present invention, the inorganic film is a layer configured to fix the particles. Although the inorganic film includes the inorganic compound, the inorganic film does not include the functional particles. Therefore, unlike the conventional case where a layer is formed using a composition including functional particles and a binder, the functional particles can be suppressed from being buried in the binder. Also, since thickness of the inorganic film is less than an average particle size of the functional particles, that is, the average particle size of the functional particles is more than the thickness of the inorganic film, the functional particles can be suppressed from being buried in the inorganic film. Thereby, the functional particles can be in contact with materials in the external environment that gradually diffuse and pass through inside the inorganic film. As the result, the functions of the functional particles can be exhibited. (Paragraphs [0017], [0029], [0040])
(2) In relation to Reference 1
In the Search Report, the Examiner recognizes that "inorganic binder" in Reference 1 corresponds to "inorganic film including inorganic compound" in the present invention, and that "inorganic powder" in Reference 1 corresponds to "functional particles" in the present invention.
However, although Reference 1 discloses particle size of the inorganic powder, Reference 1 does not disclose the relationship between the particle size of the inorganic powder and the thickness of the inorganic binder.
Also, in Reference 1, for the purpose of eliminating the defects of the bulky glass fabric such as skin irritation of glass fiber; a fray when cutting fabric; fabric easily bores by welding spark; and heterogeneous feeling and rejection response against lustrous surface, a bulky glass fabric is coated with and impregnated with a treatment agent mainly including inorganic powder and binder (page 2, left upper column to right upper column). Therefore, in Reference 1, unlike the present invention, there is no need to contact the inorganic powder with the materials in the external environment in order to exhibit the function of the inorganic powder. For the reason described above, Reference 1 does not include the thought of making the thickness of the inorganic binder thinner than the particle size of the inorganic powder, for the purpose of contacting the inorganic powder with the materials in the external environment.
Therefore, the present invention is novel and inventive over Reference 1.
(3) In relation to Reference 2
In the Search Report, the Examiner recognizes that "film including silica obtained by hydrolysis of methyltriethoxysilane and tetraethoxysilane" in Reference 2 corresponds to "inorganic film including inorganic compound" in the present invention, and "silica" in the silica sol in Reference 2 corresponds to "functional particles" in the present invention.
However, Reference 2 does not disclose the relationship between the particle size of the silica in the silica sol and the thickness of the film including silica obtained by hydrolysis of methyltriethoxysilane and tetraethoxysilane.
Also, since the composite material in Reference 2 is an elastic insulating material, there is no need to contact the silica (particles) with the materials in the external environment in order to exhibit the function of the silica (particles), unlike the present invention. For the reason described above, Reference 2 does not include the thought of making the thickness of the film including silica obtained by hydrolysis of methyltriethoxysilane and tetraethoxysilane thinner than the particle size of the silica (particles), for the purpose of contacting the silica (particles) with the materials in the external environment.
Therefore, the present invention is novel and inventive over Reference 2.
(4) In relation to Reference 3
In the Search Report, the Examiner recognizes that "layer including water glass or a mineral wool binder" in Reference 3 corresponds to "inorganic film including inorganic compound" in the present invention, and "aerogel particles" in Reference 3 corresponds to "functional particles" in the present invention.
Although Reference 3 discloses the particle size of the aerogel particles, Reference 3 does not disclose the relationship between the particle size of the aerogel particles and the thickness of the layer including water glass or a mineral wool binder.
Also, since the composite material in Reference 3 is an insulation material (claim 16), there is no need to contact the aerogel particles with the materials in the external environment in order to exhibit the function of the aerogel particles, unlike the present invention. For the reason described above, Reference 3 does not include the thought of making the thickness of the layer including water glass or a mineral wool binder thinner than the particle size of the aerogel particles, for the purpose of contacting the aerogel particles with the materials in the external environment.
Therefore, the present invention is novel and inventive over Reference 3.
(5) In relation to Reference 4
In the Search Report, the Examiner recognizes that "porous metal plating layer" in Reference 4 corresponds to "inorganic film including inorganic compound" in the present invention, and "hydrogen absorbing alloy fine particles" in Reference 4 corresponds to "functional particles" in the present invention.
Although Reference 4 discloses the particle size of the hydrogen absorbing alloy fine particles, Reference 4 does not disclose the relationship between the particle size of the hydrogen absorbing alloy fine particles and the thickness of the porous metal plating layer.
Also, Reference 4 discloses that, since the whole of the hydrogen absorbing alloy fine particles supported by the sheet substrate is covered with the porous metal plating layer, the falling and scattering from the sheet substrate are prevented, even when the micronization of the hydrogen absorbing alloy fine particles proceeds; and that, since the sheet substrate is formed porous so that the metal plating layer penetrates inside the sheet substrate to seal the hydrogen absorbing alloy fine particles, the effect of preventing the falling and scattering can be improved (paragraph [0016]). Reference 4 also discloses that the metal plating layer is formed porous; has gas permeability; and the hydrogen absorbing alloy fine particles can adsorb and desorb hydrogen without any difficulty ([0017]). From these descriptions, it is understood that the hydrogen absorbing alloy fine particles in Reference 4 are buried in the porous metal plating layer, as shown in FIG. 1 of Reference **4.**
Therefore, the present invention is inventive over Reference 4.
